(19) Europäisches Patentamt / European Patent Office / Office européen des brevets

(11) **EP 2 977 677 B1**

(12) **EUROPÄISCHE PATENTSCHRIFT**

(45) Veröffentlichungstag und Bekanntmachung des Hinweises auf die Patenterteilung:
**23.05.2018 Patentblatt 2018/21**

(21) Anmeldenummer: **15002152.5**

(22) Anmeldetag: **21.07.2015**

(51) Int Cl.:
*F23D 14/58* (2006.01)    *F23R 3/28* (2006.01)
*F02K 9/52* (2006.01)    *F23N 1/00* (2006.01)

(54) **EINSPRITZELEMENT FÜR EINE RAKETENBRENNKAMMER**

INJECTION ELEMENT FOR A ROCKET COMBUSTION CHAMBER

ELEMENT D'INJECTION POUR UNE CHAMBRE DE COMBUSTION DE FUSEE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.07.2014 DE 102014011101**

(43) Veröffentlichungstag der Anmeldung:
**27.01.2016 Patentblatt 2016/04**

(73) Patentinhaber: **ArianeGroup GmbH**
**82024 Taufkirchen (DE)**

(72) Erfinder: **Alting, Jan**
**D-85636 Höhenkirchen-Siegertsbrunn (DE)**

(74) Vertreter: **Schicker, Silvia et al**
**Wuesthoff & Wuesthoff**
**Patentanwälte PartG mbB**
**Schweigerstraße 2**
**81541 München (DE)**

(56) Entgegenhaltungen:
WO-A2-2004/099601    DE-A1-102004 029 029
JP-A- 2010 174 649    US-A- 3 373 769
US-A- 5 117 627    US-A- 6 050 085

**Beschreibung**

Die Erfindung betrifft ein Einspritzelement für eine Raketenbrennkammer und ein Raketentriebwerk.

Einspritzelemente dienen der Einbringung und Gemischaufbereitung von Treibstoffen in die Raketenbrennkammer. Es existieren unterschiedliche Arten von Einspritzelementen. In Raketentriebwerken werden entweder Einstoff-oder Zweistoffeinspritzelemente eingesetzt. Bei Letzteren, die der Zuführung zweier Treibstoffkomponenten zur Reaktion in der Raketenbrennkammer dienen, wird in der Regel auf eine koaxiale Bauweise zurückgegriffen. Der Aufbau und die Funktionsweise unterschiedlicher Arten von Einspritzelementen sind aus dem Stand der Technik bekannt.

Leitungs- und Einspritzsysteme der Raketentriebwerke weisen in Abhängigkeit der eingesetzten Treibstoffe unterschiedliche Charakteristika und Abmessungen auf. Insbesondere ist dies davon abhängig, ob gasförmige oder flüssige Treibstoffe zum Einsatz kommen.

Bei Lage-Regelungstriebwerken, die direkt aus sogenannten Stufentanks versorgt werden, können Treibstoffe sowohl in gasförmiger als auch in flüssiger Phase vorliegen. Dies kann dazu führen, dass abhängig vom Aggregatzustand der Massendurchsatz in einem Einspritzsystem unterschiedlich ist. Diesem Umstand muss bei der Gestaltung eines Leitungs- und Einspritzsystems Rechnung getragen werden.

Die DE 10 2004 029 029 A1 offenbart einen Einspritzkopf zum Zuführen zumindest zweier Medien gleichbleibender Aggregatszustände zu einem Brennraum. Der Einspritzkopf ist aus mindestens zwei koaxial zu einer Achse ineinandergreifenden Segmenten aufgebaut, wobei die mindestens zwei Segmente mindestens einen Verteilkanal mit einem zugeordneten langgezogenen Auslassbereich für einen Strom eines ersten Mediums und mindestens einen Verteilkanal mit einem zugeordneten langgezogenen Auslassbereich für einen Strom eines zweiten Mediums begrenzende Wandbereiche aufweisen. Die Auslassbereiche sind durch jeweilige Mantelkörper der mindestens zwei Segmente ausgebildet, die ein elastisches Material aufweisen. Eine Stelleinrichtung ist dafür vorgesehen, auf die jeweiligen Mantelkörper der mindestens zwei Segmente mechanisch einzuwirken, so dass eine Querschnittsfläche der Auslassbereiche variabel einstellbar ist, um so einen aus den Auslassbereichen austretenden Massenstrom einzustellen.

Die US 3,373,769 A betrifft einen Einspritzkopf für ein Raketentriebwerk, der dazu eingerichtet ist, einen Strom zweier voneinander getrennter Fluide in eine Brennkammer einzustellen. Der Einspritzkopf umfasst zwei Einspritzpassagen für das jeweilige Fluid, wobei in den Einspritzpassagen ein Filterelement zum Filtern des durch die jeweilige Einspritzpassage geleiteten Fluids angeordnet ist.

Es ist Aufgabe der vorliegenden Erfindung, ein Einspritzelement für eine Raketenbrennkammer anzugeben, welches einen gleichförmigen Massendurchsatz unabhängig vom Aggregatzustand eines Treibstoffs ermöglicht. Es ist weiterhin Aufgabe der Erfindung, ein entsprechendes Raketentriebwerk anzugeben.

Diese Aufgaben werden gelöst durch ein Einspritzelement gemäß den Merkmalen des Patentanspruches 1 und ein Raketentriebwerk gemäß den Merkmalen des Patentanspruches 11. Vorteilhafte Ausgestaltungen ergeben sich aus den abhängigen Patentansprüchen.

Gemäß einem ersten Aspekt der Erfindung wird ein Einspritzelement für eine Raketenbrennkammer mit einem Einsatz vorgeschlagen, der im Wesentlichen die Form eines Hohlzylinders mit einem axialen Kanal umfasst und der einen Raum der Brennkammer mit einem Raum eines Treibstoffs verbindet. Der Einsatz umfasst ein Anpassungsmittel, durch das der Strömungsquerschnitt des axialen Kanals in Abhängigkeit zumindest eines ersten oder zweiten Aggregatzustands des in den Raum der Brennkammer einzuspritzenden Treibstoffs anpassbar ist.

Das Einspritzelement ermöglicht es, in Abhängigkeit des Aggregatzustands des Treibstoffs jeweils einen geeigneten, angepassten Strömungsquerschnitt zur Verfügung zu stellen. Damit ist es möglich, das erfindungsgemäße Einspritzelement zumindest in zwei Betriebsmodi zu betreiben, wobei ein Wechsel zwischen zwei Betriebsmodi in jeder Richtung ermöglicht wird. Ebenso beherrscht das vorgeschlagene Einspritzelement den Übergang zwischen den jeweils zwei Zuständen. Die der Erfindung zugrunde liegende Überlegung besteht darin, dass der Massendurchsatz eines inkompressiblen Fluids in einer Leitung bzw. einem Einspritzsystem durch folgende Gleichung (1) beschrieben werden kann:

$$\dot{m} = \rho A w . \qquad (1)$$

In Gleichung (1) bezeichnen $\dot{m}$ den Massendurchsatz, $\rho$ die Dichte des zu fördernden Treibstoffs (d.h. des Fluids), $A$ den Strömungsquerschnitt in dem axialen Kanal des Einsatzes und $w$ die Geschwindigkeit, mit der der geförderte Treibstoff durch den axialen Kanal des Einsatzes gefördert wird. In Abhängigkeit von dem Aggregatzustand des Treibstoffs unterscheidet sich die Dichte des Mediums, gegebenenfalls um mehrere Größenordnungen. Unter der An-nahme, dass ähnliche Massenströme $\dot{m}$ für die zumindest zwei Aggregatszustände des Treibstoffs erreicht werden sollen und es jeweils geeignete Geschwindigkeiten w gibt, diesen durch das Einspritzelement zu fördern, verbleibt der Strömungsquerschnitt $A$ als zu variierender Parameter. Um somit ähnliche Massenströme für unterschiedliche Aggregatszustände des Treibstoffs zu erreichen, erfolgt eine Variation des Strömungsquerschnitts in Abhängigkeit des Aggregatzustands des Treibstoffs.

Die Variation des Strömungsquerschnitts in Abhängigkeit des Aggregatzustands des Treibstoffs erfolgt mittels des Anpassungsmittels, das den Strömungsquerschnitt bzw. Strömungswiderstand durch seine inhärenten Eigenschaften an den Aggregatzustand des Treibstoffs anpasst.

Der Treibstoff weist als ersten Aggregatzustand einen gasförmigen Zustand und als zweiten Aggregatzustand einen flüssigen Zustand auf. Für den Betriebsmodus des "gasförmigen" Treibstoffs und des "flüssigen" Treibstoffs unterscheiden sich die Dichten des Treibstoffs um mehrere Größenordnungen, wobei die Dichte des flüssigen Treibstoffs sehr viel größer als die Dichte des gasförmigen Treibstoffs ist.

Dementsprechend ist das Anpassungsmittel dazu ausgebildet, beim Einspritzen des im ersten Aggregatzustand (gasförmiger Zustand) vorliegenden Treibstoffs einen ersten Strömungsquerschnitt bereitzustellen und beim Einspritzen des im zweiten Aggregatzustand (flüssiger Treibstoff) vorliegenden Treibstoffs einen zweiten Strömungsquerschnitt bereitzustellen, wobei der erste Strömungsquerschnitt im Verhältnis des Dichteunterschieds wesentlich größer ist als der zweite Strömungsquerschnitt. Mit anderen Worten bedeutet dies, dass das Anpassungsmittel beim Betrieb des Einspritzelements mit einem gasförmigen Treibstoff im Wesentlichen den Strömungsquerschnitt des axialen Kanals nutzt, während beim Betrieb mit flüssigem Treibstoff eine starke Verringerung dieses Strömungsquerschnitts des axialen Kanals gegeben ist.

Das Anpassungsmittel umfasst in zweckmäßiger Weise zumindest einen an den Querschnitt des axialen Kanals angepassten Strömungseinsatz, der in Abhängigkeit des Aggregatzustands des durch ihn strömenden Treibstoffs einen unterschiedlichen Strömungsquerschnitt und damit Durchströmwiderstand aufweist. Während für einen gasförmigen Treibstoff damit ein Strömungsquerschnitt, der im Wesentlichen oder nahezu dem Strömungsquerschnitt des axialen Kanals entspricht, durch den Strömungseinsatz bereitgestellt wird, verringert dieser für einen flüssigen Treibstoff die durchstömbare Fläche und stellt damit einen (sehr viel) kleineren Strömungsquerschnitt zur Verfügung.

Ein jeweiliger Strömungseinsatz umfasst zumindest ein, insbesondere feinmaschiges, Sieb mit einer Vielzahl an Öffnungen. Die Summe des Querschnitts aller Öffnungen eines jeweiligen Siebs stellt den ersten Strömungsquerschnitt bereit. Die Öffnungen des Siebs sind damit für den in gasförmiger Form vorliegenden Treibstoff zumindest annähernd verlustfrei durchströmbar. Der Strömungseinsatz stellt damit ein Siebsystem mit einem oder mehreren Sieben dar. Bei einem Siebsystem mit zwei Sieben können diese in einem bestimmten Abstand zueinander angeordnet sein. Zwischen den zwei Sieben kann eine optionale Lochplatte angeordnet sein.

Die Maschenweite und/oder die Maschentiefe der Öffnungen des Siebs sind derart beschaffen, dass beim Auftreffen von flüssigem Treibstoff die Oberflächen der Öffnungen benetzt werden, so dass durch Kapillarkräfte und/oder Oberflächenspannung die Größe der Öffnungen reduziert ist, wobei die Summe des daraus resultierenden Querschnitts aller Öffnungen den zweiten Strömungsquerschnitt bereitstellt. Durch die reduzierte Größe der Öffnungen ergibt sich eine Erhöhung des Druckverlustes aufgrund des verringerten Strömungsquerschnitts.

Der Strömungseinsatz bzw. dessen Sieb(e) kann zumindest einen Strömungskanal aufweisen, dessen Querschnitt in Abhängigkeit des Aggregatzustands des durch ihn strömenden Treibstoffs nicht oder nicht wesentlich veränderbar ist. Dies ist beispielsweise dann zweckmäßig, wenn durch das oder die Sieb(e) beim Einsatz eines flüssigen Treibstoffes sich dessen oder deren Öffnungen vollständig verschließen, so dass dem Treibstoff nur noch der Querschnitt des zumindest einen Strömungskanals zum Durchströmen zur Verfügung steht.

Der Strömungskanal kann beispielsweise zentral in dem oder den Sieb(en) des Strömungseinsatzes angeordnet sein. Alternativ oder zusätzlich kann der Strömungskanal ringförmig ausgebildet sein und das oder die Sieb(e) des Strömungseinsatzes zumindest abschnittsweise umlaufen.

Die Anzahl der derart ausgebildeten Strömungseinsätze (d.h. Siebsysteme) in dem Einsatz des Einspritzelements kann prinzipiell beliebig gewählt werden. Es kann ausreichend sein, lediglich einen einzigen Strömungseinsatz in dem axialen Kanal des Einsatzes vorzusehen. Es können auch mehrere, hintereinander beabstandet zueinander angeordnete Strömungseinsätze vorgesehen sein. Ein jeweiliger Strömungseinsatz kann dabei im Vergleich zu einem anderen Strömungseinsatz die gleiche oder eine unterschiedliche Gestalt im Hinblick auf die Art des oder der Siebe aufweisen. Beispielsweise kann ein erster Strömungseinsatz eine andere Anzahl an Sieben und/oder Strömungskanälen aufweisen als ein anderer Strömungseinsatz. Alternativ oder zusätzlich können der oder die Strömungskanäle unterschiedlicher Strömungseinsätze hinsichtlich ihrer Größe und/oder ihres Orts variieren.

Um den Übergang von einem Betrieb mit einem im zweiten, flüssigen Aggregatzustand vorliegenden Treibstoff zu einem Betrieb mit im ersten, gasförmigen Aggregatzustand vorliegenden Treibstoff vornehmen zu können, kann es weiterhin zweckmäßig sein, wenn an den Einsatz, insbesondere an den oder die Strömungseinsätze, eine Heizung angrenzt oder die Heizung den Einsatz bzw. den Strömungseinsatz umgibt. Dadurch kann in flüssiger Form vorliegender Treibstoff von den Öffnungen des oder der Siebe verdampft werden. Dadurch werden das oder die Sieb(e) wieder vollständig für einen in gasförmiger Form vorliegenden Treibstoff durchgängig.

Das Einspritzelement kann als Koaxial-Einspritzelement ausgebildet sein, wobei dieses zusätzlich eine Hülse umfasst, die den Einsatz koaxial umschließt und mit diesem einen Ringspalt bildet und einen Raum eines zweiten Treibstoffs mit dem Raum der Brennkammer verbindet.

Der durch den das Anpassungsmittel mit dem zumindest einen Strömungsensatz umfassenden Einsatz geförderte Treibstoff kann beispielsweise ein Oxidator (z.B. Sauerstoff) sein. Der zweite Treibstoff, der durch den zwischen der Hülse und dem Einsatz gebildeten Ringspalt gefördert wird, kann ein Brennstoff sein.

Das Einspritzelement kann z.B. bei sogenannten LOX (Liquid Oxygen)-Posts bei Koaxial-Elementen zum Einsatz kommen. Alternativ kann ein Einsatz des erfindungsgemäßen vorgeschlagenen Einspritzelements in anderen Einspritzkopfkonfigurationen, in denen eine oder zwei Treibstoffkomponenten aufgrund ihres Aggregatzustands ganz oder teilweise abgeschaltet werden können, vorgesehen sein. Eine weitere Anwendung besteht darin, ein wie oben beschriebenes Einspritzelement bei Lage-Regelungstriebwerken, die direkt aus Stufentanks mit Treibstoff versorgt werden, einzusetzen. Bei diesen können Treibstoffe sowohl in gasförmiger als auch in flüssiger Phase vorliegen.

Die Erfindung wird nachfolgend näher anhand eines Ausführungsbeispiels in der Zeichnung beschrieben. Es zeigen:

Figur 1          eine schematische Darstellung eines erfindungsgemäßen Einspritzelements,

Figuren 2 bis 4   unterschiedliche Ausführungsbeispiele von in einem erfindungsgemäßen Einspritzelement zum Einsatz kommender Siebe für einen Strömungseinsatz zur Anpassung eines Strömungsquerschnitts in dem in Fig. 1 dargestellten Einspritzelement.

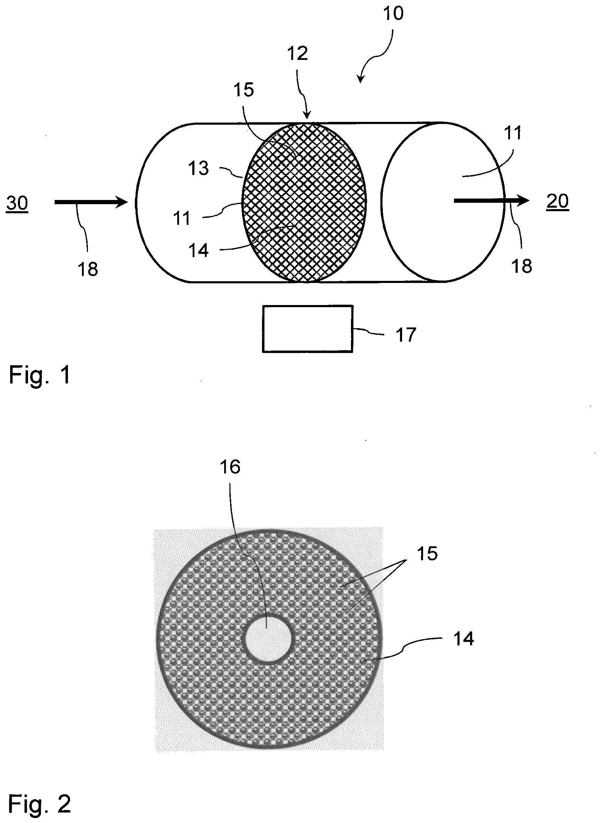

Figur 1 zeigt einen Einsatz 10 eines Einspritzelements, der im Wesentlichen die Form eines Hohlzylinders mit einem axialen Kanal 11 aufweist und einen Raum 20 einer Brennkammer mit einem Raum 30 eines Treibstoffs (Treibstoffreservoir oder Treibstoffzuführung/-leitung) verbindet. Die Brennkammer 30 und das Treibstoffreservoir 20 sowie zugehörige Leitungen sind nicht dargestellt. Der Einsatz 10 kommt bei einem Einspritzelement für eine Raketenbrennkammer, z.B. eines Lageregelungstriebwerks, zum Einsatz. Das Einspritzelement kann darüber hinaus weitere, der Einfachheit halber ebenfalls nicht näher dargestellte Komponenten, wie z.B. eine den Einsatz 10 umgebende Hülse zur Ausgestaltung eines Koaxial-Elements, aufweisen, welche jedoch für die Erfindung ohne Bedeutung sind.

Ein von dem Treibstoffreservoir 30 in die Raketenbrennkammer 20 zu fördernder Treibstoff, z.B. ein Oxidator wie Sauerstoff, kann in gasförmiger oder flüssiger Gestalt vorliegen. Beispielsweise strömt während der Zündung anfangs gasförmiger Sauerstoff in die auch als Thruster bezeichnete Raketenbrennkammer und passiert dabei den axialen Kanal 11 des Einsatzes 10. Nach kurzer Zeit beginnt der Sauerstoff in Flüssigkeit umzuschlagen. Durch die nachfolgend näher beschriebene Ausgestaltung des Einsatzes 10 mit einem Anpassungsmittel 12, durch das der wirksame Strömungsquerschnitt A des axialen Kanals 11 in Abhängigkeit des Aggregatzustands (gasförmig oder flüssig) des in die Raketenbrennkammer 20 einzuspritzenden Treibstoffs anpassbar ist, kann das Einspritzelement und damit das Raketentriebwerk als bi-stabiles System in zwei Betriebsmodi betrieben werden. In einem ersten Betriebsmodus erfolgt ein Betrieb mit gasförmigem Treibstoff. In einem zweiten Betriebsmodus erfolgt ein Betrieb mit einem flüssigen Treibstoff. Dabei wird durch das Einspritzelement und insbesondere die Ausgestaltung des Anpassungsmittels des Einsatzes auch der Übergang zwischen diesen beiden Zuständen reversibel in beide Richtungen ermöglicht.

Um das Einspritzelement bi-stabil betreiben zu können, muss, unabhängig vom Aggregatzustand des Treibstoffs, der Massendurchsatz in dem Einsatz 10 ähnlich sein. Der Massendurchsatz lässt sich durch die bereits erwähnte Gleichung (1) beschreiben, bei der $\dot{m}$ der Massendurchsatz, $\rho$ die Dichte des Treibstoffs, $A$ der verfügbare Strömungsquerschnitt und w die Geschwindigkeit, mit der der Treibstoff durch den Einsatz 10 strömt, ist. Für den ersten Betriebsmodus "gasförmig", der nachfolgend mit dem Index "g" gekennzeichnet ist, und den zweiten Betriebsmodus "flüssig", der nachfolgend mit dem Index "f" gekennzeichnet ist, unterscheiden sich die Dichten des Treibstoffs um mehrere Größenordnungen, das heißt $\rho_f$ ist sehr viel größer als $\rho_g$ ($\rho_f >>> \rho_g$).

Unter der Annahme, dass ähnliche Massenströme $\dot{m}_f \approx \dot{m}_g$ bei geeigneten Geschwindigkeiten w erreicht werden sollen, verbleibt die durchströmte Fläche $A$ als freier, zu variierender Parameter. Das in dem Einsatz vorgesehene Anpassungsmittel 12 in Gestalt eines oder mehrerer Strömungseinsätze 13 ermöglicht es, für gasförmigen und flüssigen Treibstoff jeweils einen angepassten Strömungsquerschnitt $A_f$ oder $A_g$ zur Verfügung zu stellen, wobei gilt: $A_f <<< A_g$.

Die Umschaltung bzw. Variation des Strömungsquerschnitts A des axialen Kanals 11 erfolgt somit in Abhängigkeit des Aggregatzustands des Treibstoffs. Dies wird durch eine konstruktive Ausgestaltung eines das Anpassungsmittel 12 repräsentierenden Strömungseinsatzes 13, z.B. in Gestalt eines Siebsystems, erzielt, welcher für einen gasförmigen Treibstoff eine Fläche $A_g \approx A$ und für flüssigen Treibstoff eine im Vergleich zur Fläche $A_g$ sehr viel kleinere Fläche, d.h. $A_f <<< A$, zur Verfügung stellt, wobei A die Fläche des axialen Kanals 11 des Einsatzes 10 ohne Querschnittreduzierende Elemente ist.

Im Ausführungsbeispiel gemäß Figur 1 ist lediglich ein einziger Strömungseinsatz 13 (Siebsystem) in dem axialen Kanal 11 angeordnet. In einer alternativen, nicht näher dargestellten Ausgestaltung könnte auch eine Mehrzahl an Strömungseinsätzen 13 in dem axialen Kanal 11 angeordnet sein. Die Strömungseinsätze 13 können beabstandet zueinander hintereinander in dem axialen Kanal 11 angeordnet sein. Die Strömungseinsätze 13 können gleich oder unterschiedlich ausgebildet sein. Jeder Strömungseinsatz kann ein oder mehrere feinmaschige Siebe umfassen. Optional kann bei einem Strömungseinsatz mit zwei Sieben zwischen diesen auch eine Lochplatte vorgesehen sein.

Unterschiedliche Varianten von Sieben 14, wie diese in einem Strömungseinsatz 13 eingesetzt werden können, sind in den Fig. 2 bis 4 dargestellt. Jedes der dargestellten feinmaschigen Siebe 14 umfasst eine Vielzahl an Öffnungen 15. Die Summe des Querschnitts aller Öffnungen 15 stellt dabei den ersten Strömungsquerschnitt $A_g$ bereit. Die Öffnungen 15 des Siebs 14 sind somit für den in gasförmiger Form vorliegenden Treibstoff annähernd verlustfrei durchströmbar. Die Maschenweite und/oder -tiefe des Siebes 14 wird derart ausgelegt, dass beim Auftreffen von flüssigem Treibstoff die Oberflächen des Siebes 14 derart benetzt werden, das es aufgrund von Kapillarkräften und Oberflächenspannungen zu einer Erhöhung des Druckverlusts kommt. Dies kann bis zu einem kompletten Verschluss der Öffnungen 15 des Siebes führen.

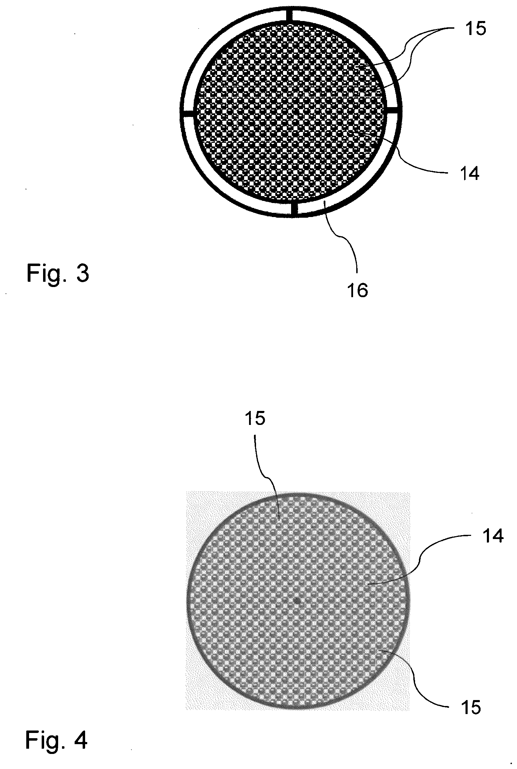

Die Siebe eines jeweiligen Strömungseinsatzes 13 können zumindest einen Strömungskanal 16, wie dies beispielhaft in den Figuren 2 und 3 dargestellt ist, oder keinen Strömungskanal, wie in Fig. 4 gezeigt, aufweisen. In dem in Figur 2 dargestellten Ausführungsbeispiel eines Siebes 14 ist ein zentral angeordneter Strömungskanal 16 vorgesehen. In dem in Figur 3 gezeigten Ausführungsbeispiel eines Siebes 14 ist der Strömungskanal 16 als Ringkanal ausgebildet. Figur 4 zeigt ein Ausführungsbeispiel eines Siebes, welches keinen Strömungskanal umfasst. In diesem Fall sind die Öffnungen 15 des Siebes 14, das heißt die Maschenweite und/oder Maschentiefe der Öffnungen 15 des Siebs derart beschaffen, das beim Durchströmen mit einem flüssigen Treibstoff entweder kein oder ein vollständiger Verschluss der Öffnungen erfolgt.

Die Funktionsweise des in einem Einspritzventil vorgesehenen Einsatzes 10 mit einem aus zwei Sieben bestehenden Strömungseinsatz 13 kann ähnlich der Funktionsweise einer in der DE 10 2008 026 320 B3 beschriebenen Doppelsiebhülse sein, welche zur Separation von Treibgas vom Treibstoff in einer Befüll- und Entnahmevorrichtung eines Treibstofftanks zum Einsatz kommt. Durch die Benetzung von Sieben der Doppelsiebhülse durch Flüssigkeit kommt es zu einer Benetzung der Festkörperstrukturen und dem Einschluss einer Gasblase im Innenbereich der Doppelsiebhülse. Das Eindringen von Flüssigkeit wird durch den sogenannten Bubblepoint-Druck zweier Siebe reduziert. Dieser Druck ist derjenige Druck, den eine Strömung aufbringen muss, um die Gasblase aus dem Innenbereich der Doppelsiebhülse zu entfernen. Dadurch wird das Eindringen von Flüssigkeit in einen unerwünschten Bereich verhindert. Der notwendige Bubblepoint-Druck hängt von der Strömungsgeschwindigkeit eines Flüssigkeits-Gasgemisches ab.

Durch Nutzung eines erfindungsgemäßen Einspritzelements kann damit während der Zündung eines Raketentriebwerks anfangs gasförmiger Sauerstoff in das Raketentriebwerk durch den Einsatz 10 mit dem Strömungseinsatz 13 fließen. Sobald der Sauerstoff beginnt, in Flüssigkeit umzuschlagen, benetzen Flüssigkeitstropfen die Öffnungen 15 des oder der Siebe und verringern dessen wirksamen Strömungsquerschnitt. Dadurch wird der ursprüngliche Strömungsquerschnitt teilweise oder, je nach Ausgestaltung des Strömungseinsatzes (Siebsystem) auch vollständig versperrt. Die Funktionsweise ist somit für beide Betriebszustände, d.h. beide Aggregatszustände des Treibstoffs, sowie den Übergang zwischen beiden Betriebszuständen gegeben.

Nach Abschaltung des Triebwerks bewirkt das das Triebwerk umgebende Vakuum gemeinsam mit der im Triebwerk durch die vorherige Verbrennung entstandene Wärme, dass der flüssige Sauerstoff von dem Strömungseinsatz 13 bzw. dem Sieb verdampft und sich über das Triebwerk verflüchtigt. Sollte die von dem Triebwerk abgegebene Wärme durch die vorherige Verbrennung nicht ausreichend sein, den flüssigen Treibstoff zu verflüchtigen, so kann zusätzlich eine Heizung 17 vorgesehen sein, welche in der Nähe des Einsatzes 10 angeordnet ist. Insbesondere kann die Heizung 17 den Einsatz 10 umgeben. Vorzugsweise wird die Heizung 17 derart angeordnet, dass der oder die Strömungseinsätze 13 mit der zur Verflüchtigung des flüssigen Treibstoffs erforderlichen Wärme beaufschlagt werden können. Damit ist das Sieb eines jeweiligen Strömungseinsatzes 13 wieder vollständig durchgängig und konditioniert für die nächste Zündung des Raketentriebwerks.

Das beschriebene Prinzip ist z.B. anwendbar für LOX-Posts bei Koaxial-Einspritzelementen. Eine Anwendung ist allgemein bei Einspritzkopfkonfigurationen denkbar, in denen eine oder zwei Treibstoffkomponenten aufgrund ihres Aggregatzustands ganz oder teilweise abgeschaltet werden können. Bei beiden Anwendungen kann eine teilweise oder eine vollständige Verblockung des Siebs in dem Einsatz 10 des Einspritzelements erfolgen.

Die Ausgestaltung und Auslegung des Siebs eines Strömungseinsatzes im Hinblick auf Kapillaren, Maschen, Siebmaschen, Siebabstand und Lochplattengestaltung erfolgt nach den Anforderungen einer jeweiligen Anwendung.

## BEZUGSZEICHENLISTE

10 Einsatz
11 axialer Kanal
12 Anpassungmittel
13 Strömungseinsatz
14 Sieb

15 Öffnung
16 Strömungskanal
17 Heizung
18 Strömungsrichtung
20 Raum einer Brennkammer
30 Raum eines Treibstoffs

**Patentansprüche**

1. Einspritzelement für eine Raketenbrennkammer mit einem Einsatz (10), der im Wesentlichen die Form eines Hohlzylinders mit einem axialen Kanal (11) umfasst und der einen Raum (20) der Brennkammer mit einem Raum (30) eines Treibstoffs verbindet,
**dadurch gekennzeichnet, dass**
das Einspritzelement dazu eingerichtet ist, in einem ersten Betriebsmodus, in dem der in den Raum (20) der Brennkammer einzuspritzende Treibstoff einen ersten Aggregatzustand aufweist, und in einem zweiten Betriebsmodus, in dem der in den Raum (20) der Brennkammer einzuspritzende Treibstoff einen zweiten Aggregatzustand aufweist, betrieben zu werden, und der Einsatz (10) ein Anpassungsmittel (12) umfasst, das dazu eingerichtet ist, einen Strömungsquerschnitt (A) des axialen Kanals (11) in Abhängigkeit zumindest des ersten und des zweiten Aggregatzustands des in den Raum (20) der Brennkammer einzuspritzenden Treibstoffs einzustellen, wobei das Anpassungsmittel (12) zumindest einen Strömungseinsatz (13) mit zumindest einem Sieb (14) mit einer Vielzahl von Öffnungen (15) aufweist, der in Abhängigkeit des Aggregatzustands des durch diesen strömenden Treibstoffs einen unterschiedlichen Strömungsquerschnitt und Durchströmwiderstand aufweist, und wobei eine Maschenweite und/oder Maschentiefe der Öffnungen (15) des Siebs (14) derart ausgelegt ist/sind, dass beim Auftreffen von flüssigem Treibstoff auf das Sieb (14) aufgrund von Kapillarkräften und/oder Oberflächenspannungen der Strömungsquerschnitt des Strömungseinsatzes (13) reduziert ist, so dass der Strömungsquerschnitt (A) des axialen Kanals (11) in Abhängigkeit des Aggregatzustands des durch diesen strömenden Treibstoffs einstellbar ist.

2. Einspritzelement nach Anspruch 1, bei dem der Treibstoff als ersten Aggregatzustand einen gasförmigen Zustand und als zweiten Aggregatzustand einen flüssigen Zustand aufweist.

3. Einspritzelement nach Anspruch 1 oder 2, bei dem das Anpassungsmittel (12) dazu ausgebildet ist, beim Einspritzen des im ersten Aggregatzustands vorliegenden Treibstoffs einen ersten Strömungsquerschnitt ($A_g$) bereitzustellen und beim Einspritzen des im zweiten Aggregatzustands vorliegenden Treibstoffs einen zweiten Strömungsquerschnitt ($A_f$) bereitzustellen, wobei der erste Strömungsquerschnitt ($A_g$) größer ist als der zweite Strömungsquerschnitt ($A_f$).

4. Einspritzelement nach Anspruch 1, bei dem die Summe des Querschnitts aller Öffnungen (15) eines jeweiligen Siebs den ersten Strömungsquerschnitt ($A_g$) bereitstellt, und wobei die Öffnungen (15) des Siebs (14) für den in gasförmiger Form vorliegenden Treibstoff zumindest annähernd verlustfrei durchströmbar sind.

5. Einspritzelement nach Anspruch 4, bei dem die Maschenweite und/oder Maschentiefe der Öffnungen (15) des Siebs (14) derart beschaffen sind, dass beim Auftreffen von flüssigem Treibstoff die Oberflächen der Öffnungen (15) benetzt werden, so dass durch Kapillarkräfte und/oder Oberflächenspannung die Größe der Öffnungen (15) reduziert ist, wobei die Summe des daraus resultierenden Querschnitts aller Öffnungen (15) den zweiten Strömungsquerschnitt ($A_f$) bereitstellt.

6. Einspritzelement nach einem der Ansprüche 1 bis 5, bei dem der Strömungseinsatz (13) zumindest einen Strömungskanal (16) aufweist, dessen Querschnitt in Abhängigkeit des Aggregatzustands des durch ihn strömenden Treibstoffs nicht oder nicht wesentlich veränderlich ist.

7. Einspritzelement nach Anspruch 6, bei dem der Strömungskanal (16) zentral in dem oder den Sieben (14) des Strömungseinsatzes (13) angeordnet ist.

8. Einspritzelement nach Anspruch 6 oder 7, bei dem der Strömungskanal (16) ringförmig ausgebildet ist und das oder die Siebe (14) des Strömungseinsatzes (13) zumindest abschnittsweise umläuft.

9. Einspritzelement nach einem der vorhergehenden Ansprüche, bei dem an den Einsatz (10) eine Heizung (17) angrenzt oder die Heizung den Einsatz (10) umgibt.

10. Einspritzelement nach einem der vorhergehenden Ansprüche, bei dem das Einspritzelement ein Koaxial-Einspritzelement ist, wobei dieses zusätzlich eine Hülse umfasst, die den Einsatz (10) koaxial umschließt und mit diesem einen Ringspalt bildet und einen Raum eines zweiten Treibstoffs mit dem Raum (20) der Brennkammer verbindet.

11. Raketentriebwerk mit einer Brennkammer und zumindest einem der Brennkammer zugeordneten Einspritzelement, wobei das Einspritzelement gemäß einem der vorhergehenden Ansprüche ausgebildet ist.

**Claims**

1. An injection element for a rocket combustion chamber, comprising an insert (10), which has essentially the shape of a hollow cylinder with an axial channel (11) and which connects a space (20) of the combustion chamber with a propellant space (30),
   **characterized in that** the injection element is configured to be operated in a first operating mode where the propellant to be injected into the space (20) of the combustion chamber has a first physical state, and in a second operating mode where the propellant to be injected into the space (20) of the combustion chamber has a second physical state, and that the insert (10) comprises an adaptation device (12) configured to adjust a flow cross-section (A) of the axial channel (11) depending on at least the first and the second physical state of the propellant to be injected into the space (20) of the combustion chamber, the adaptation device (12) comprising at least one flow insert (13) with at least one screen (14) having a plurality of openings (15), the flow insert (13) having different flow cross-sections and flow resistances depending on the physical state of the propellant flowing therethrough, and wherein a mesh width and/or a mesh depth of the openings (15) of the screen (14) is/are configured such that, when liquid propellant impinges on the screen (14), the flow cross-section is reduced due to capillary forces and/or surface tensions, so that the flow cross-section (A) of the axial channel (11) is adjustable depending on the physical state of the propellant flowing through the latter.

2. The injection element according to claim 1, wherein the propellant has a gaseous state as a first physical state and a liquid state as a second physical state.

3. The injection element according to claim 1 or 2, wherein the adaptation device (12) is configured for providing a first flow cross-section ($A_g$), when the propellant injected has the first physical state, and a second flow cross-section ($A_f$), when the propellant injected has the second physical state, the first flow cross-section ($A_g$) being larger than the second flow cross-section ($A_f$).

4. The injection element according to claim 1, wherein the sum of the cross-sections of all the openings (15) of the respective screen provides the first flow cross-section ($A_g$), and wherein the openings (15) of the screen (14) allow the propellant having the gaseous state to flow therethrough in an at least approximately loss-free manner.

5. The injection element according to claim 4, wherein the mesh width and/or the mesh depth of the openings (15) of the screen (14) is/are configured such that, when liquid propellant impinges, the surfaces of the openings (15) are wetted, so that the size of the openings (15) is reduced by capillary forces and/or surface tensions, the sum of the resultant cross-sections of all the openings (15) providing the second flow cross-section ($A_f$).

6. The injection element according to one of the claims 1 to 5, wherein the flow insert (13) comprises at least one flow passage (16) whose cross-section is not or not substantially variable depending on the physical state of the propellant flowing therethrough.

7. The injection element according to claim 6, wherein the flow passage (16) is arranged centrally in the screen (14) or screens (14) of the flow insert (13).

8. The injection element according to claim 6 or 7, wherein the flow passage (16) is annular in shape and extends around the screen (14) or screens (14) of the flow insert (13) at least sectionwise.

9. The injection element according to one of the preceding claims, wherein a heating (17) borders on the insert (10) or the heating surrounds the insert (10).

10. The injection element according to one of the preceding claims, wherein the injection element is a coaxial injection element, the latter comprising in addition a sleeve, which encloses the insert (10) coaxially and defines an annular gap therewith and connects a space of a second propellant with the space (20) of the combustion chamber.

11. A rocket engine comprising a combustion chamber and at least one injection element associated with the combustion chamber, wherein the injection element is configured according to one of the preceding claims.


**Revendications**

1. Élément d'injection pour une chambre de combustion de fusée comprenant un insert (10) qui présente sensiblement la forme d'un cylindre creux avec un canal axial (11) et qui relie un compartiment (20) de la chambre de combustion à un compartiment (30) d'un combustible,
   **caractérisé en ce que**
   l'élément d'injection est conçu pour fonctionner dans un premier mode de fonctionnement, dans lequel le combustible à injecter dans le compartiment (20) de la chambre de combustion présente un premier état d'agrégation, et dans un deuxième mode de fonctionnement, dans lequel le combustible à injecter dans le compartiment (20) de la chambre de combustion présente un deuxième état d'agrégation, et l'insert (10) comprend un moyen d'adaptation (12) qui est conçu pour régler une section transversale d'écoulement (A) du canal axial (11) en fonction d'au moins le premier ou le deuxième état d'agrégation du combustible à injecter dans le compartiment (20) de la chambre de combustion, dans leque le moyen d'adaptation (12) présente au moins un insert d'écoulement (13) avec au moins un tamis (14) doté d'une pluralité d'ouvertures (15) qui présente une section transversale d'écoulement et une résistance de passage différentes en fonction de l'état d'agrégation du combustible s'écoulant à travers lui, et dans lequel une largeur de maille et/ou une profondeur de maille des ouvertures (15) du tamis (14) est(sont) dimensionnée(s) de manière telle que, lors de l'impact de combustible liquide sur le tamis (14), la section transversale d'écoulement de l'insert d'écoulement (13) est réduite en raison des forces capillaires et/ou des tensions superficielles, de sorte que la section transversale d'écoulement (A) du canal axial (11) est réglable en fonction de l'état d'agrégation du combustible s'écoulant à travers lui.

2. Élément d'injection selon la revendication 1, dans lequel le combustible présente en tant que premier état d'agrégation un état gazeux et en tant que deuxième état d'agrégation un état liquide.

3. Élément d'injection selon la revendication 1 ou 2, dans lequel le moyen d'adaptation (12) est conçu pour fournir, lors de l'injection du combustible présent dans le premier état d'agrégation, une première section transversale d'écoulement ($A_g$) et pour fournir, lors de l'injection du combustible présent dans le deuxième état d'agrégation, une deuxième section transversale d'écoulement ($A_f$), la première section transversale d'écoulement ($A_g$) étant plus grande que la deuxième section transversale d'écoulement ($A_f$).

4. Élément d'injection selon la revendication 1, dans lequel la somme de la section transversale de toutes les ouvertures (15) d'un tamis respectif fournit la première section transversale d'écoulement ($A_g$), les ouvertures (15) du tamis (14) pouvant être traversées au moins à peu près sans pertes par le combustible présent sous forme gazeuse.

5. Élément d'injection selon la revendication 4, dans lequel la largeur de maille et/ou la profondeur de maille des ouvertures (15) du tamis (14) sont dimensionnées de manière telle que, lors de l'impact de combustible liquide, les surfaces des ouvertures (15) sont mouillées, de sorte que la taille des ouvertures (15) est réduite par les forces capillaires et/ou la tension superficielle, la somme de la section transversale de toutes les ouvertures (15) qui en résulte fournissant la deuxième section transversale d'écoulement ($A_f$).

6. Élément d'injection selon l'une des revendications 1 à 5, dans lequel l'insert d'écoulement (13) présente au moins un canal d'écoulement (16) dont la section transversale n'est pas ou pas sensiblement variable en fonction de l'état d'agrégation du combustible s'écoulant à travers lui.

7. Élément d'injection selon la revendication 6, dans lequel le canal d'écoulement (16) est disposé centralement dans le ou les tamis (14) de l'insert d'écoulement (13).

8. Élément d'injection selon la revendication 6 ou 7, dans lequel le canal d'écoulement (16) est réalisé en forme d'anneau et entoure au moins sur certaines parties le ou les tamis (14) de l'insert d'écoulement (13).

9. Élément d'injection selon l'une des revendications précédentes, dans lequel un chauffage (17) est adjacent à l'insert (10) ou le chauffage entoure l'insert (10).

10. Élément d'injection selon l'une des revendications précédentes, dans lequel l'élément d'injection est un élément d'injection coaxial, lequel comprenant en outre un manchon qui entoure l'insert (10) coaxialement et forme avec celui-ci une fente annulaire et relie un compartiment d'un deuxième combustible au compartiment (20) de la chambre de combustion.

11. Moteur de fusée doté d'une chambre de combustion et d'au moins un élément d'injection associé à la chambre de combustion, l'élément d'injection étant réalisé selon l'une des revendications précédentes.

Fig. 1

Fig. 2

Fig. 3

Fig. 4

**IN DER BESCHREIBUNG AUFGEFÜHRTE DOKUMENTE**

**In der Beschreibung aufgeführte Patentdokumente**

- DE 102004029029
- DE A1
- US 3373769 A
- DE 102008026320 B3